# EUROPEAN PATENT SPECIFICATION

(11) **EP 4 338 587 B1**
(45) Date of publication and mention of the grant of the patent: **09.04.2025**
(21) Application number: 23196101.2
(22) Date of filing: 07.09.2023
(51) Int. Cl.: A01K 5/00, B01F 33/502, F16H 1/22, F16H 47/04, F16H 37/08, B01F 27/922

(54) **A POWER TRANSMISSION SYSTEM FOR A MIXER WAGON FOR PREPARING FOOD MIXTURES FOR ANIMALS**
KRAFTÜBERTRAGUNGSSYSTEM FÜR EINEN MISCHWAGEN ZUR ZUBEREITUNG VON NAHRUNGSMITTELMISCHUNGEN FÜR TIERE
SYSTÈME DE TRANSMISSION DE PUISSANCE POUR WAGON MÉLANGEUR POUR PRÉPARER DES MÉLANGES ALIMENTAIRES POUR ANIMAUX

(30) Priority: 14.09.2022 IT 202200018792
(43) Date of publication of application: 20.03.2024
(73) Proprietor: OMSI Trasmissioni S.p.A., 25077 Roè Volciano, Brescia (IT)
(72) Inventor: RONCHI, Daniele, I-25077 Roè Volciano, BRESCIA (IT); SONCINA, Renato, I-25077 Roè Volciano, BRESCIA (IT)
(74) Representative: Gamba, Alessandro

(56) References cited:
- EP-A1- 2 860 426
- EP-A1- 3 179 133
- DE-A1- 10 319 252
- US-A1- 2008 081 724

## Description

The object of the present invention is a power transmission system for a mixer wagon for preparing food mixtures for animals, in particular for animals for rearing. A further object of the present invention is a mixer wagon comprising the power transmission system.

It is known in the state of the art that food mixtures for animals are prepared by combining the different ingredients that constitute a recipe, depending upon the characteristics of the animal and of the rearing. It is further known that such operation is performed in the mixing tank of a mixer wagon, in which at least one auger is housed to shred and homogeneously mix the ingredients.

In the state of the art, self-propelled mixer wagons are known, i.e., equipped with engine means thereof, typically an endothermic engine assembly, that make it possible to move the mixer wagon and to actuate the at least one auger. Also known, furthermore, are towed mixer wagons which require a tow vehicle, for example a tractor for moving the mixer wagon. Such a tow vehicle must include a power take-off for driving the at least one auger. In other words, a towed mixer wagon is devoid of engine means thereof.

As is known, the mixer wagon comprises a power transmission system for transmitting power between the engine means and the at least one auger. Such power transmission system comprises at least one reducer group that is configured for appropriately varying the speed of rotation of the at least one auger, for example as a function of the quantity of ingredients to be mixed or according to the production cycle (unloading steps, cleaning steps).

Power transmission systems are known within the field that comprise a fixed ratio reducer group, wherein each ratio corresponds to a predefined number of turns of the output shaft of said reducer group. Such a fixed ratio reducer group offers little flexibility of use.

Also know, furthermore, are power transmission systems comprising a reducer group with a continuously variable transmission (CVT), by virtue of which it is possible to continuously vary the transmission ratio between two limiting values. In particular, power transmission systems are known comprising a hydrostatic type continuously variable reducer group based upon planetary gears.

A typical issue with state-of-the-art power transmission system is in relation to the step of starting the engine means.

In particular, to allow the engine means to reach minimum operating conditions, i.e., to overcome the initial state of inertia, it is necessary to interrupt the power transmission chain, especially under full mixing tank conditions. To this end, in towed mixer wagons use is made of the clutch assembly comprised within the tow vehicle to disengage the power take-off. In self-propelled mixer wagons, conversely, it is necessary to include an appropriate clutch assembly, thereby increasing the costs of the power transmission system.

one of the critical aspects is observed at the instant wherein the power transmission chain is restored insofar as elevated peaks of torque occur that risk damaging the components of the transmission system. Examples of power transmission system having these drawbacks are known from documents DE10319252A1, EP2860426A1 and US2008/081724A1. A mixer wagon showing an alternative way to avoid high torque peaks generated in the mechanical transmission is known from document EP3179133A1.

Additionally, within the field, the need is particularly felt to reduce the operating cost and environmental impact of mixer wagons. In particular, increasingly in demand are power transmission systems that are very efficient and that allow for a reduction in fuel consumption.

The object of the present invention is to present a mixer wagon that meets the aforesaid requirements and overcomes the drawbacks of the prior art.

This object is achieved by the power transmission system claimed in claim 1 and by the mixer wagon claimed in claim 9. The claims dependent thereon seek protection for further features entailing further technical advantages.

The features and advantages of the invention will be made readily apparent from the following description of preferred embodiment examples thereof, provided purely by way of non-limiting example, with reference to the accompanying figures, wherein:

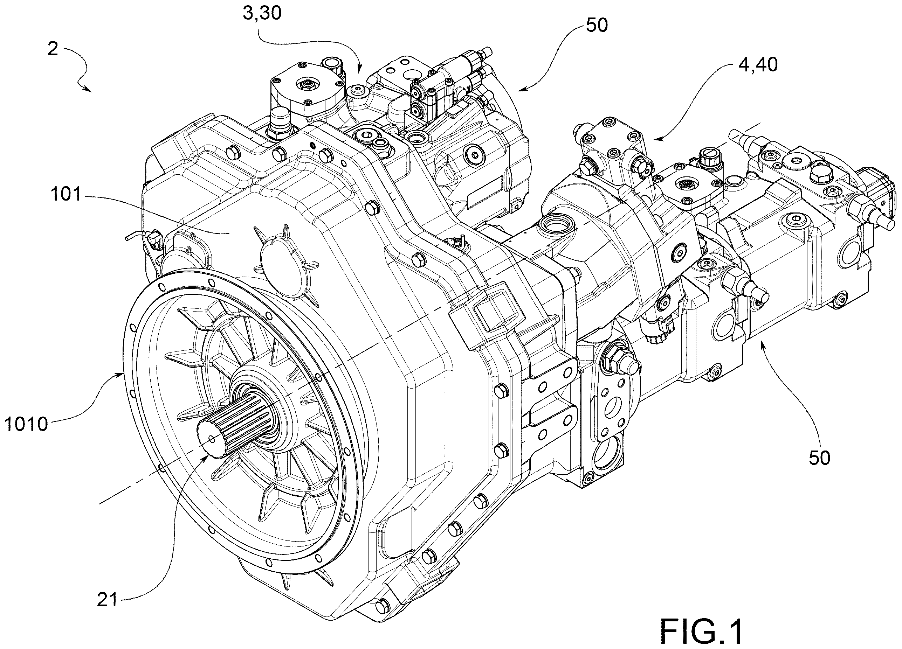

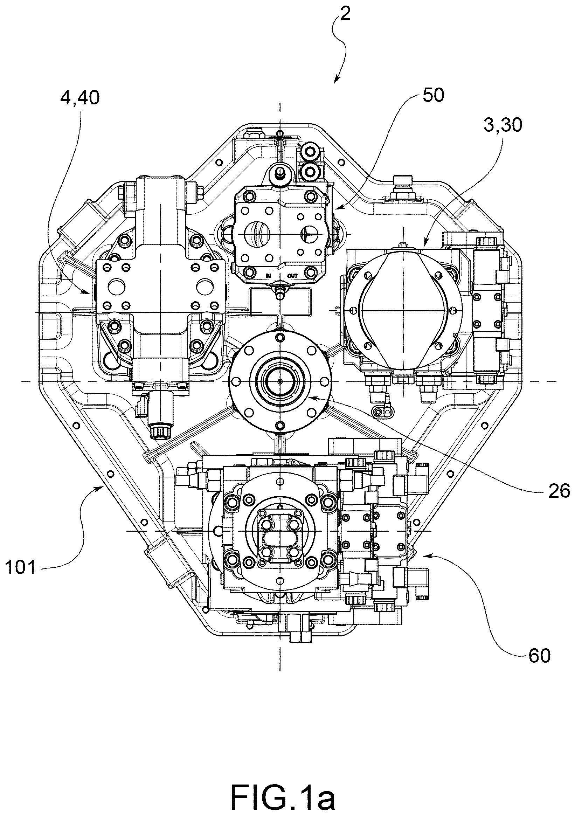

- Figures 1 and 1a show a perspective view and a rear view of the power transmission system according to the present invention, according to a preferred embodiment;

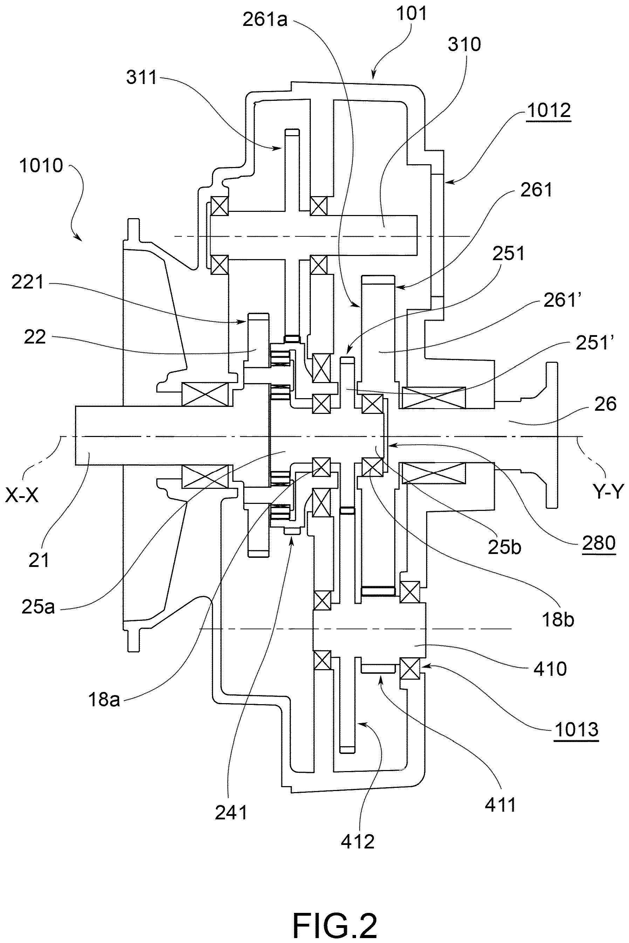

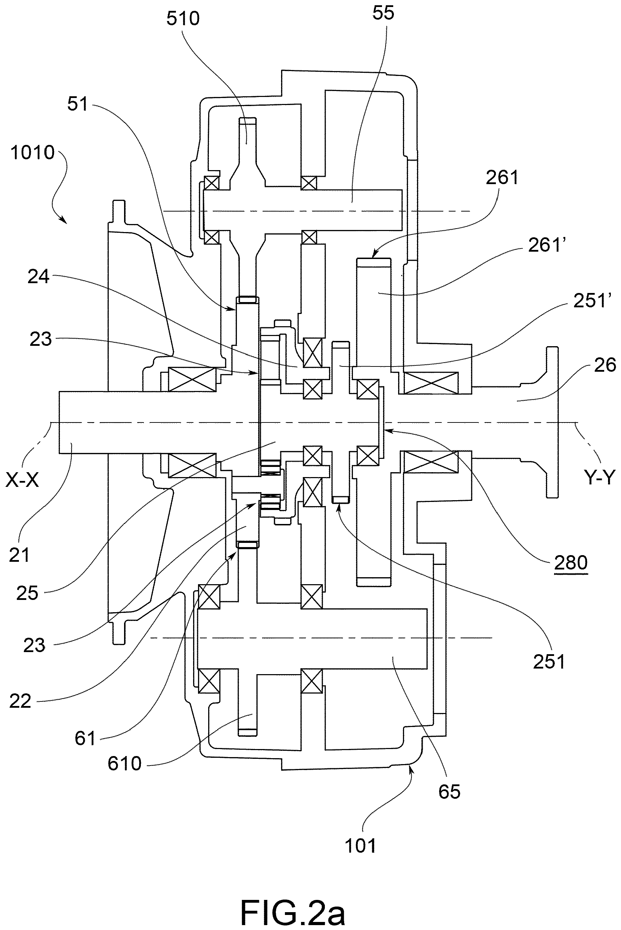

- Figures 2 and 2a show a cross-section view of the power transmission system according to the present invention, according to a preferred embodiment, respectively on a first section plane and on a second section plane;

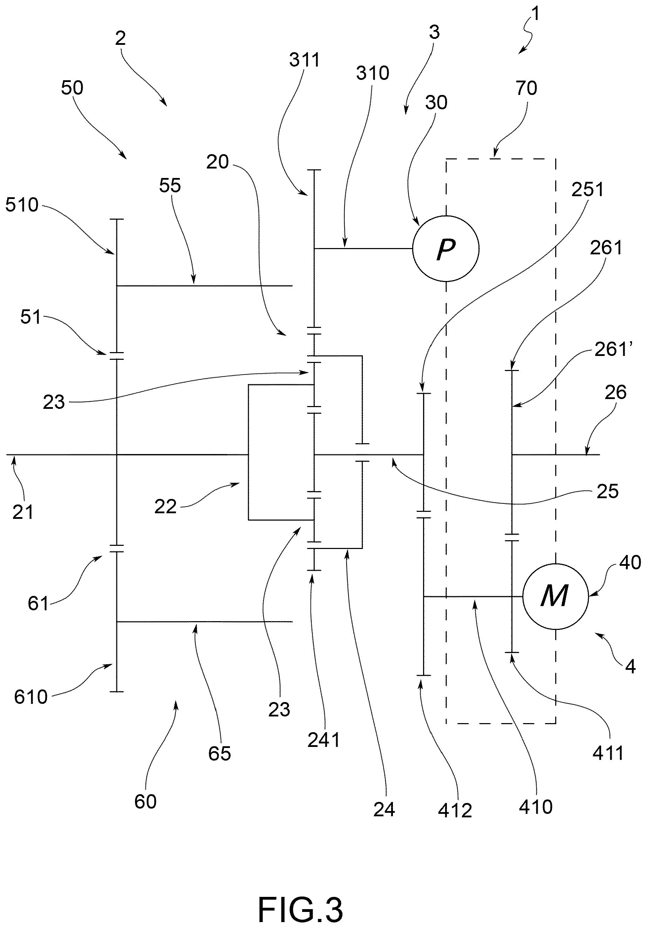

- Figure 3 depicts a connection diagram of the power transmission system according to the present invention, according to a preferred embodiment;

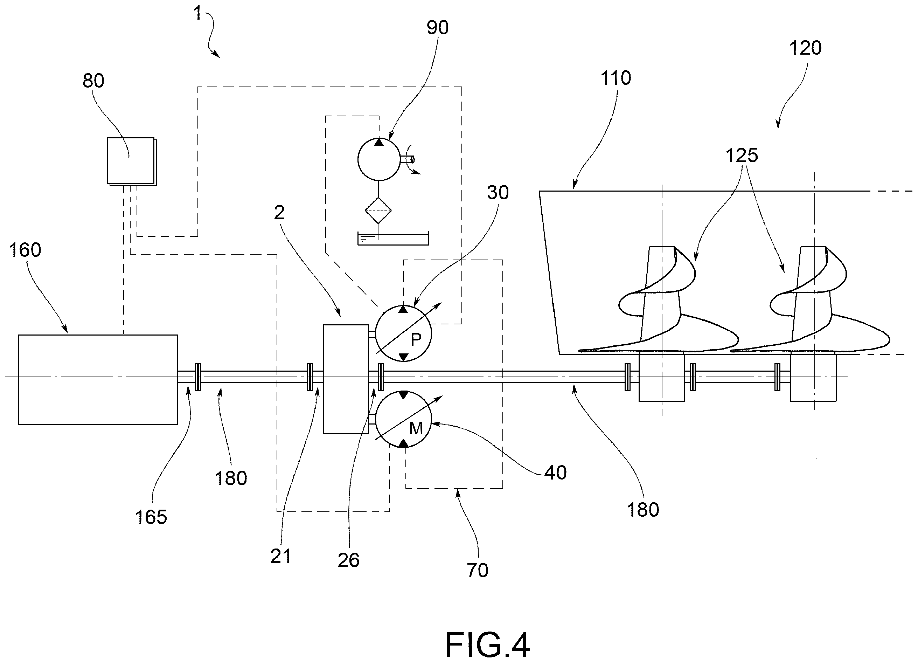

- Figure 4 shows a connection diagram of the power transmission system, according to the present invention, according to a preferred embodiment.

With reference to the accompanying figures, a power transmission system for a mixer wagon, according to the present invention is indicated in the entirety thereof with the numeral 1.

According to a preferred embodiment, the mixer wagon comprises a support frame for supporting the mixer wagon components and systems connecting them therebetween.

According to the present invention, the mixer wagon comprises a mixing tank 110 suitable for containing the mixture ingredients and a mixing assembly 120 comprising at least one auger 125 housed in said mixing tank 110 and suitable for shredding the ingredients of the mixture.

In general, during the course of the discussion, the term "engine means" refers to an operating unit configured for delivering mechanical power.

In particular, as regards self-propelled mixer wagons, the term "engine means" refers to an engine assembly included in the mixer wagon, for example, an endothermic engine assembly that is preferably Diesel powered. Conversely, as regards towed mixer wagons, the term "engine means" refers to a power take-off included in the towing vehicle, such as a farm tractor.

According to the present invention, the power transmission system 1 is operatively connectable between the wagon engine means 160 and the mixing assembly 120.

According to the present invention, the power transmission system 1 comprises a reducer group 2, a pump assembly 3 and an engine assembly 4.

According to the present invention, the reducer group 2 comprises an inlet shaft 21 that extends along inlet shaft axis X-X configured for receiing power from the wagon engine means 160. Additionally, the reducer group 2 comprises an outlet shaft 26 that extends along an outlet shaft axis Y-Y configured for transmitting power to the mixing assembly 120.

According to a preferred embodiment, the outlet shaft 26 is coaxial to the inlet shaft 21, i.e., the inlet shaft axis X-X is coincident to the outlet shaft axis Y-Y.

According to the present invention, the reducer group 2 comprises a planetary gear 20 comprising a satellite carrier or carrier 22 rigidly connected in rotation to the inlet shaft 21, a crown 24 operatively connected in rotation to the carrier 22, a sun shaft 25 operatively connected in rotation to the carrier 22.

According to a preferred embodiment, the sun shaft 25 extends along a sun axis Z-Z, preferably coaxial to the inlet shaft axis X-X and/or the outlet shaft axis Y-Y.

According to a preferred embodiment the planetary gear 20 comprises at least one satellite gear 23, preferably two or three satellite gears 23, operatively connected in rotation to the carrier 22 and engaged both with the crown 24 and the sun shaft 25.

In other words, the crown 24 and the sun shaft 25 receive power from the carrier 22 by means of the at least one satellite gear 23.

According to the present invention, the aforementioned planetary gear 20 components are operatively connected therebetween so as to implement a reduction ratio between the inlet shaft 21 and the outlet shaft 26.

In other words, the reducer group 2, the pump assembly 3 and the engine assembly 4 make it possible to vary the reduction ratio in a continuous manner between two predefined reduction ratios.

According to a preferred embodiment, the power transmission system 1 comprises a main housing 101 that houses the carrier 22, the at least one satellite gear 23, the crown 24 and the sun shaft 25, and houses, at least partially, the inlet shaft 21 and the outlet shaft 26.

According to a preferred embodiment, the inlet shaft 21 and/or the outlet shaft 26 project at least partially from the main housing 101.

According to a preferred embodiment, the inlet shaft 21 and/or the outlet shaft 26 are configured for supporting the planetary gear 20. Preferably, the inlet shaft 21 and/or the outlet shaft 26 comprise specific support portions that are engageable by support elements, for example roller or plain bearings.

According to a preferred embodiment, the main housing 101 comprises an engine linkage portion 1010 configured for being connected to the engine means, preferably to a Diesel engine assembly.

According to a preferred embodiment, a rear portion of the inlet shaft 21 of the reducer group 2 projects externally from the engine linkage portion 1010.

According to the present invention, the pump assembly 3 comprises a variable displacement pump 30, i.e., configurable in a plurality of pump displacements. In each pump displacement, the variable displacement pump 30 moves a predefined volume of pressurized oil.

According to a preferred embodiment, the variable displacement pump 30 is configurable in a plurality of intermediate pump displacements of between a maximum pump displacement, wherein a predefined maximum volume of oil is moved, and a minimum pump displacement, wherein the volume of oil moved is null.

In other words, the variable displacement pump 30 configured at minimum pump displacement does not move oil under pressure.

According to the present invention, the pump assembly 3 comprises pump transmission members 31 operatively connected to the crown 24 and to the pump 30.

According to the present invention, the engine assembly 4 comprises a variable displacement hydraulic engine 40 i.e., configurable in a plurality of engine displacements. In each engine displacement, a predefined volume of oil under pressure flows through the hydraulic engine 40.

According to a preferred embodiment, the hydraulic engine 40 is configurable in a plurality of intermediate engine displacements, of between a maximum engine displacement, wherein a predefined maximum volume of oil flows, and a minimum engine displacement, wherein the volume of oil that flows through the hydraulic engine 40 is null.

In other words, with the hydraulic engine 40 configured at minimum engine displacement, there is no oil under pressure that flows by means of the hydraulic engine 40.

According to the present invention, the hydraulic engine 40 is operatively connected to the variable displacement pump 30.

According to a preferred embodiment, the variable displacement pump 30 and the hydraulic engine 40 are fluidically connected by means of a closed loop main fluidic circuit 70.

In other words, preferably, the oil under pressure that is moved by the variable displacement pump 30 flows through the hydraulic engine 40.

According to the present invention, the engine assembly 4 comprises engine transmission members 41 operatively connected to the hydraulic engine 40, to the sun shaft 25 and to the outlet shaft 26 to command the speed variation of the sun shaft 25 by means of the hydraulic engine 40 and to transmit power between the sun shaft 25 and the outlet shaft 26.

According to a preferred embodiment, the engine transmission members 41 implement a reduction ratio between the sun shaft 25 and the outlet shaft 26. According to the present invention, the engine transmission members 41 comprise two or more gears wheels.

According to the present invention, the power transmission system 1 is configurable in an initial configuration, wherein the engine assembly 4 inhibits the rotation of the outlet shaft 26.

In other words, in the initial configuration, the outlet shaft 26 of the reducer group 2 is stationary.

According to a preferred embodiment, in the initial configuration, the hydraulic engine 40 is configured at the maximum engine displacement and generates maximum resistant engine torque towards the sun shaft 25. According to a preferred embodiment, in the initial configuration, the displacement of the variable displacement pump 30 for sending oil under pressure to the hydraulic engine 40 is null. In other words, in the initial configuration, the variable displacement pump 30 does not command the actuation of the hydraulic engine 40.

In further other words, in the initial configuration, the sun shaft 25 and the outlet shaft 26 are stationary. There is therefore no transmission of power to the outlet shaft 26.

According to a preferred embodiment, in the initial configuration, the variable displacement pump 30 is configured at minimum pump displacement and generates minimum resistant pump torque towards the crown 24.

According to a preferred embodiment, in the initial configuration, the crown 24 is free to rotate as a function of the power received by the carrier 22.

Preferably, in the initial configuration of the power transmission system 1, the power transmitted by the carrier 22 is at a minimum, insofar as the crown 24 is free to rotate and the pump 30 is in rotation with null displacement.

Therefore, in the initial configuration of the power transmission system 1, the crown 24 rotates as a function of the number of rotations of the inlet shaft 21 and of the transmission ratio between the at least one satellite gear 23 and the crown 24.

In accordance with the present invention, the power transmission system 1 is configurable in a plurality of operating configurations in which the outlet shaft 26 transmits power to the mixing assembly 120, and in particular imposes a predefined speed of rotation upon the mixing assembly 120.

In other words, in each of the operating configurations, the outlet shaft 26 of the reducer group 2 rotates at a predefined angular velocity and the mixing assembly 120 receives power, in particular the at least one auger 125 is commandled in rotation.

According to a preferred embodiment, the power transmission system 1 is configurable in a plurality of first intermediate operating configurations wherein the variable displacement pump 30 is configured at an intermediate pump displacement that is greater than the minimum pump displacement.

The variable displacement pump 30, configured at intermediate pump displacement, generates a predefined resistant pump torque towards the crown 24 that is greater than the minimum resistant pump torque. Therefore, in the first intermediate operating configurations, the crown 24 rotates as a function of the power received by the carrier 22 and as a function of the predefined resistant torque received from the variable displacement pump 30.

According to a preferred embodiment, in the first intermediate operating configurations, the hydraulic engine 40 is at maximum displacement and commands in rotation the sun shaft 25.

According to a preferred embodiment, in the first intermediate operating configurations the variable displacement pump 30 sends oil under pressure to the hydraulic engine 40 to command the sun shaft 25 in rotation by means of the main fluidic circuit 70.

In the first intermediate operating configurations the outlet shaft 26 rotates as a function of the speed of rotation of the engine 40 which is transmitted to the sun shaft 25 by means of the engine transmission members 41.

According to a preferred embodiment, the power transmission system 1 is configurable in a plurality of second intermediate operating configurations wherein the hydraulic engine 40 is configured at a predefined intermediate engine displacement that is less than the maximum engine displacement.

Preferably, the hydraulic engine 40, configured at an intermediate engine displacement, generates a predefined resistant engine torque towards the sun shaft 25 that is less than the maximum resistant engine torque.

In other words, in the second intermediate operating configurations, the hydraulic engine 40 commands in rotation the sun shaft 25 and generates less resistance to the rotation of the sun shaft 25.

According to a preferred embodiment, the power transmission system 1 is configurable in a final operating configuration in which the variable displacement pump 30 is configured at maximum pump displacement and the hydraulic engine 40 is configured at minimum engine displacement.

Preferably, in the final operating configuration, the variable displacement pump 30 generates maximum resistant pump torque towards the crown 24. Preferably, in the final operating configuration, the hydraulic engine 40 generates minimum resistant engine torque.

Therefore, in the final operating configuration of the power transmission system 1, the sun shaft 25 is free to rotate at the maximum speed which is greater than the speed of rotation reached with the second intermediate operating configurations. In particular, the sun shaft 25 rotates as a function of the number of rotations of the inlet shaft 21 and of the reduction ratio of the planetary gear 20. Additionally, the engine transmission members 41 transmit power from the sun shaft 25 to the outlet shaft 26 thereby eventually implementing a reduction ratio.

According to the invention, the pump transmission members 31 comprise a pump shaft 310 operatively connected in rotation to the variable displacement pump 30.

According to a preferred embodiment, the pump shaft 310 is at least partially housed within the carriage housing 101.

According to a preferred embodiment, the pump shaft 310 projects at least partially from the main housing 101. Preferably, the main housing 101 comprises a pump connection opening 1012 wherethrough the pump shaft 310 is accessible.

According to the invention, the pump transmission members 31 comprise a first gear wheel 311 rigidly connected in rotation to the pump shaft 310.

According to the invention, the crown 24 comprises a first outer toothing 241 meshed with the first gear wheel 311.

By means of the first gear wheel 311 meshed with the first gear wheel 241, the variable displacement pump 30 is operatively connected to the crown 24.

According to a different embodiment, the pump transmission members 31 comprise a gear wheel rigidly connected in rotation to the crown 24 and engaged with the first gear wheel 311.

According to a still further preferred embodiment the pump transmission members 31 comprise one or more return shafts and/or return wheels and/or belt or chain transmission members that are operatively connected to the crown 24.

According to the invention, the engine transmission members 41 comprise an engine shaft 410 operatively connected in rotation to the hydraulic engine 40.

According to a preferred embodiment, the engine shaft 410 is at least partially housed within the carriage housing 101.

According to a preferred embodiment, the engine shaft 410 projects at least partially from the main housing 101. Preferably, the main housing 101 comprises an engine connection opening 1013 wherethrough the engine shaft 410 is accessible.

According to the invention, the engine transmission members 41 comprise a second gear wheel 411 rigidly connected in rotation to the engine shaft 410.

According to the invention, the outlet shaft 26 comprises a second outer toothing 261 meshed with the first gear wheel 411.

According to a preferred embodiment, the second toothing 261 is a toothing of a gear wheel 261' that is rigidly connected in rotation to the outlet shaft 26.

By means of the second gear wheel 411 and the second toothing 261, the hydraulic engine 40 is operatively connected to the outlet shaft 26.

According to a different preferred embodiment, the second toothing 261 is an outer toothing of the outlet shaft 26.

According to a still further preferred embodiment the engine transmission members 41 comprise, one or more return shafts and/or return wheels and/or belt or chain transmission members that are operatively connected to the outlet shaft 26.

According to the invention, the engine transmission members 41 comprise a third gear wheel 412 rigidly connected in rotation to the engine shaft 410.

According to the invention, the sun shaft 25 comprises a third toothing 251 meshed with the third gear wheel 412.

According to a preferred embodiment, the third toothing 251 is an outer toothing of a gear wheel 251' that is rigidly connected to the sun shaft 25.

By means of the third gear wheel 412 and the third toothing 251, the hydraulic engine 40 is operatively connected to sun shaft 25.

According to a different preferred embodiment, the third toothing 251 is an outer toothing of the sun shaft 25.

In a preferred embodiment, said third toothing 251 is also engaged with the at least one satellite gear 23.

According to a still further preferred embodiment the engine transmission members 41 comprise, one or more return shafts and/or return wheels and/or belt or chain transmission members that are operatively connected to the sun shaft 25 to command in rotation the sun shaft 25.

According to a preferred embodiment, the sun shaft 25 extends axially between a first end portion 25a that is proximal to the inlet shaft 21, and a second end portion 25b that is proximal to the outlet shaft 26.

According to a preferred embodiment, the reducer group 2 comprises a pair support elements 18a, 18b, for example roller or plain bearings that support in rotation the sun shaft 25.

Preferably, one support element 18b is engaged with the second end portion 25b and with the second gear wheel 261'. For example, the support element 18b is a roller bearing comprising an outer ring engaged with an inner ring by means of a plurality of spheres or rollers, wherein the outer ring is connected in rotation to the second gear wheel 261' and the inner ring is connected in rotation to the sun shaft 25.

According to a preferred embodiment, the second gear wheel 261' comprises a lateral face 261a facing towards the sun shaft 25, and a support element housing 280 lowered into said lateral face 261a. Preferably, the support element 18b is housed within said support element housing 280.

According to a preferred embodiment, the power transmission system 1 comprises at least one auxiliary operating assembly 50, 60 operatively connected in rotation to the inlet shaft 21 for the actuation of the at least one secondary or auxiliary service of the mixer wagon either directly or by means of appropriate hydraulic pumps.

The term "secondary or auxiliary service" refers, for example, to a crushing machine, hydraulic actuators, mills, feeder services and power supply services comprised in the mixer wagon.

According to a preferred embodiment, each auxiliary operating assembly 50, 60 comprises transmission members 51, 61 and an auxiliary shaft 55, 65 operatively connected to the inlet shaft 21 by means of the transmission members 51, 61.

According to a preferred embodiment, said transmission members 51, 61, comprise an auxiliary gear wheel 510, 610 rigidly connected to the auxiliary shaft 55, 65 and engaged with the inlet shaft 21.

According to a different preferred embodiment, the auxiliary gear wheel 510, 610 is engaged with the carrier 22, for example with an outer toothing 221 of the carrier 22.

According to a preferred embodiment, the transmission members 51, 61 and/or the auxiliary shaft 55, 65 are at least partially housed in the main housing 101.

According to a preferred embodiment, the power transmission system 1 comprises a secondary pump 90 that is fluidically connected to the main pump 30 and has the function of ensuring the oversupplying of the main fluidic circuit 70 and thus to ensure the functioning of the servo-commands of the pump 30 and of the engine 40 under the various operating conditions of the power transmission system 1.

According to a preferred embodiment, the secondary pump 90 is actuated by an auxiliary shaft of the reducer group 2.

According to a different preferred embodiment, the secondary pump is actuated by means of the wagon engine means, for example by the Diesel engine assembly.

According to a different preferred embodiment, the secondary pump 90 is a pump of the auxiliary services of the mixer wagon.

According to a preferred embodiment, the auxiliary pump 90 is actuated by a dedicated device, for example an electric motor.

According to a preferred embodiment, the power transmission system 1 comprises a command unit 80 operatively connected to the pump 30 and to the engine 40 and configured for varying the displacement of the variable displacement pump 30 and the displacement of the hydraulic engine 40.

According to a preferred embodiment, the command unit 80 is configured for varying the displacement of the variable displacement pump 30 and subsequently to vary the displacement of the hydraulic engine 40, preferably as a function of the variation in displacement of the variable displacement pump 30.

During a first step of the starting operations of the wagon engine means 160, the variable displacement pump 30 is configured at the minimum pump displacement, in such a way that the crown 24 is free to rotate, and the hydraulic engine 40 is configured at maximum engine displacement, in such a way that the engine assembly 4 inhibits the rotation of the sun shaft 25 (initial configuration).

The wagon engine means 160 thus reach the operating conditions and, preferably, maintain a condition of minimal fuel consumption.

During a second step, the command unit 80 is configured for progressively commanding the increase in displacement of the variable displacement pump 30 from the minimum pump displacement to the intermediate pump displacement thereby causing a reduction in the speed of rotation of the crown 24 (first intermediate operating configurations).

During a third step, that is subsequent or else contemporaneous with the second step, the command unit 80 is configured for progressively commanding the decrease in displacement of the hydraulic engine 40 from the maximum engine displacement to the intermediate engine displacement. The hydraulic engine 40 therefore generates less resistant engine torque and the speed of rotation of the sun shaft 25 increases. Whilst maintaining a constant carrier 22 speed of rotation, the crown 24 progressively decelerates until it becomes stationary. By means of engine transmission members 41, power is transferred to the outlet shaft 26, therefore towards the mixing assembly 120 (second intermediate operating configurations).

During a fourth step or final step the variable displacement pump 30 is configured at maximum pump displacement and the hydraulic engine 40 is configured at minimum engine displacement. The crown 24 is blocked in rotation by the resistant torque generated by the variable displacement pump 30, and the outlet shaft 26 transmits power to the mixing assembly 120 (final operating configuration). In a fifth step or distribution step, for example at the end of a mixture mixing cycle, the number of revolutions of the wagon engine means 160 increases, thereby increasing the speed of rotation of the augers 125.

According to a preferred embodiment, the command unit 80 is configured for commanding the number of revolutions of the wagon engine means 160, consequently varying the speed of rotation of the inlet shaft 21 of the reducer group 2.

Preferably, the command unit 80 is configured for performing the aforementioned preceding steps in reverse order to switch the power transmission system 1 from the final operating configuration to the initial configuration.

The object of the present invention is also a mixer wagon that comprises a mixing tank 110, a mixing assembly 120 and the power transmission system 1 having the features described above.

According to a preferred embodiment, the mixer wagon is self-propelled and also comprises wagon engine means 160, for example comprising a Diesel engine assembly.

According to a different preferred embodiment, the mixer wagon is towed. In this preferred embodiment, the wagon engine means 160 are included in the tow vehicle.

According to a preferred embodiment, the wagon engine means 160 comprise an engine means outlet shaft 165 that is suitable for transmitting mechanical power that is generated by the wagon engine means 160.

According to a preferred embodiment, the power transmission system 1 is directly connected to the wagon engine means 160.

According to a preferred embodiment, the mixer wagon comprises at least one connecting joint 180, for example a cardan joint or an elastic joint, directly connected between the engine means outlet shaft 165 and the inlet shaft 21 of the reducer group 2.

According to a preferred embodiment, the mixer wagon comprises at least one connecting joint 180, for example a cardan joint, operatively connected between the outlet shaft 26 of the reducer group 2 and the mixing assembly 120.

According to a preferred embodiment, the mixing assembly 120 comprises an auger 125 that is housed within the mixing tank 110.

According to a preferred embodiment, the mixing assembly 120 comprises an additional reducer group operatively connected downstream of the outlet shaft 26 and upstream of said auger 125.

According to a different preferred embodiment, the mixing assembly 120 comprises a plurality of augers 125 that are housed within the mixing tank 110.

According to a preferred embodiment, the mixing assembly 120 comprises an additional reducer group operatively connected downstream of the outlet shaft 26 and upstream of said plurality of augers 125 or else upstream of each auger 125 of said plurality of augers 125.

Innovatively, the power transmission system and the mixer wagon extensively fulfill the intended object, overcoming the issues of the prior art, insofar as they make it possible to start the engine means without interrupting the chain of power transmission between the engine means and the mixing assembly.

Advantageously, the need to include an appropriate clutch assembly for the self-propelled mixer wagon is obviated. Advantageously, as regards towed mixer wagons, the need is obviated to utilize the clutch assembly of the tow vehicle during the step of starting the engine means.

Advantageously, the hydraulic components of the power transmission system (pump and hydraulic engine) perform the function of a clutch assembly that is analogous to a mechanical type clutch assembly.

Advantageously, the power transmission system obviates issues relating to peaks of torque that are observed in power transmission systems that employ a clutch assembly during the starting steps.

Advantageously, the power transmission system makes it possible to vary the transmission ratio in a continuous manner thereby avoiding jerks and abrupt variations in speed.

Advantageously the power transmission system transfers power downstream with high efficiency.

Advantageously, the chain of power transmission during the mixing operations is predominantly mechanical and therefore characterized by elevated mechanical performance.

Advantageously, the power transmission system makes it possible to minimize the use of the hydraulic components of the power transmission system (pump and hydraulic engine) which are characterized by lower hydraulic efficiency compared to the efficiency of the mechanical component (planetary gear). Advantageously, in fact, the hydraulic components are predominantly utilized during the initial operating steps and during the intermediate operating steps to reach the final operating condition.

Advantageously, during the initial step and during the first intermediate operating steps, i.e., with the sun shaft respectively stationary and at low speeds, power is transmitted to the mixing assembly in a predominantly hydrostatic manner (by means of oil under pressure that is sent by the variable displacement pump). During the second intermediate operating steps and during the final step, i.e., with the sun shaft respectively at elevated speeds of rotation and at maximum speed, power is transmitted to the mixing assembly predominantly mechanically (by means of the reducer group gear wheels).

Advantageously, the power transmission system makes it possible to configure the engine means under optimal or sub-optimal conditions of minimum fuel consumption. Advantageously, the Diesel engine assembly is configurable for constant rotation.

Advantageously, the power transmission system makes it possible to maintain the outlet shaft of the engine means at a constant speed of rotation.

Advantageously, the power transmission system makes it possible to maintain and/or vary the operating conditions of the engine means and at the same time inhibit the rotation of the at least one auger, for example during mixer wagon movement operations when no mixing is required.

Advantageously, the power transmission system makes it possible to vary the speed of rotation of the augers as a function of requirements, for example during a mixing tank discharge step. Advantageously, in fact, increasing the number of revolutions of the wagon engine increases the speed of rotation of the augers and the mixture is pushed due to the effect of the centrifugal force at the outside of the mixing tank, for example by means of a dedicated distribution opening.

Advantageously, the power transmission system is particularly compact and has overall a reduced footprint.

Advantageously, the power transmission system achieves elevated outlet speed command.

Advantageously, it is possible to electronically command the speed of rotation of the augers, thereby obviating the need to include complex torque command along the transmission system.

It is clear that a person skilled in the art may make changes to the invention described above in order to meet contingent needs, which changes all fall within the scope of protection as defined in the following claims.

## Claims

1. A power transmission system (1) for a mixer wagon for preparing mixtures for animals, wherein the mixer wagon comprises a mixing tank (110) and a mixing assembly (120) comprising at least one auger (125) housed in said mixing tank (110), wherein the power transmission system (1) is operatively connectable between wagon engine means (160) and the mixing assembly (120) and comprises:
i) a reducer group (2) comprising:
- an inlet shaft (21) configured for receiving power from the wagon engine means (160);
- an outlet shaft (26) configured for transmitting power to the mixing assembly (120);
- a planetary gear (20) comprising:
a) a carrier (22) rigidly connected in rotation to the inlet shaft (21);
b) a crown (24) operatively connected in rotation to the carrier (22);
c) a sun shaft (25) operatively connected in rotation to the carrier (22);
ii) a pump assembly (3) comprising a variable displacement pump (30) and pump transmission members (31) operatively connected with the crown (24);
iii) an engine assembly (4) comprising a variable displacement hydraulic engine (40) operatively connected with the variable displacement pump (30), and engine transmission members (41) operatively connected with the outlet shaft (26) and with the sun shaft (25) to command the speed variation of the solar shaft (25) by means of the hydraulic engine (40) and transmit power to the outlet shaft (26);
wherein the power transmission system (1) is configurable in:
- an initial configuration in which the engine assembly (4) prevents the rotation of the outlet shaft (26);
- a plurality of operating configurations in which the outlet shaft (26) transmits power to the mixing assembly (120);
wherein the pump transmission members (31) comprise a pump shaft (310) operatively connected in rotation to the variable displacement pump (30), and a first gear wheel (311) rigidly connected in rotation to the pump shaft (310), wherein the crown (24) comprises a first outer toothing (241) meshed with the first gear wheel (311);
wherein the engine transmission members (41) comprise an engine shaft (410) operatively connected in rotation to the hydraulic engine (40) and a third gear wheel (412) rigidly connected in rotation to the engine shaft (410), wherein the sun shaft (25) comprises a third outer toothing (251) meshed with the third gear wheel (412);
wherein the power transmission system is **characterized in that** the engine transmission members (41) comprise a second gear wheel (411) rigidly connected in rotation to the engine shaft (410), wherein the outlet shaft (26) comprises a second outer toothing (261) meshed with the second gear wheel (411).

2. A power transmission system (1) according to claim 1, wherein, in the initial configuration, the variable displacement pump (30) is configured at minimum pump displacement and the hydraulic engine (40) is configured at maximum engine displacement.

3. A power transmission system (1) according to claim 1 or claim 2, wherein the power transmission system (1) is configurable in a final operating configuration in which the variable displacement pump (30) is configured at maximum pump displacement and the hydraulic engine (40) is configured at minimum engine displacement.

4. A power transmission system (1) according to any one of the preceding claims, wherein the variable displacement pump (30) and the hydraulic engine (40) are fluidically connected by means of a closed loop main fluidic circuit (70).

5. A power transmission system (1) according to any one of the preceding claims, comprising at least one auxiliary operating assembly (50, 60) operatively connected in rotation to the inlet shaft (31) to actuate auxiliary services of the mixer wagon, for example a mill or a milling cutter.

6. A mixer wagon comprising a mixing assembly (120) that comprises at least one auger (125), and a power transmission system (1) according to any one of the preceding claims, operatively connected to the mixing assembly (120).

7. A mixer wagon according to claim 6, wherein the mixing wagon is of the self-propelled type and the power transmission system (1) is directly connected to the wagon engine means (160).

8. A mixer wagon according to claim 7, wherein the wagon engine means (160) comprise an engine means outlet shaft (165), wherein the mixing wagon comprises at least one connecting joint (180), for example a cardan joint, directly connected between the engine means outlet shaft (165) and the inlet shaft (31) of the reducer group (2).

## Patentansprüche

1. Kraft- bzw. Leistungsübertragungssystem (1) für einen Mischwagen zum Zubereiten von Futtermischungen für Tiere, wobei der Mischwagen einen Mischtank (110) und eine Mischanordnung (120) mit zumindest einer Schnecke (125) umfasst, die in dem Mischtank (110) untergebracht ist, wobei das Leistungsübertragungssystem (1) zwischen Wagenmotormitteln (160) und der Mischanordnung (120) operativ verbindbar ist und umfasst:
i) eine Untersetzungsgruppe (2), umfassend:
- eine Eingangswelle (21), die zum Empfangen von Kraft bzw. Leistung von den Wagenmotormitteln (160) konfiguriert ist;
- eine Ausgangswelle (26), die zum Übertragen von Kraft bzw. Leistung auf die Mischanordnung (120) konfiguriert ist;
- ein Planetengetriebe (20), umfassend:
a) einen Träger (22), der in Drehung starr mit der Eingangswelle (21) verbunden ist;
b) eine Krone (24), die in Drehung operativ mit dem Träger (22) verbunden ist;
c) eine Sonnenwelle (25), die in Drehung operativ mit dem Träger (22) verbunden ist;
ii) eine Pumpenanordnung (3), die eine Verstellpumpe (30) und Pumpenübertragungsglieder (31) umfasst, die operativ mit der Krone (24) verbunden sind;
iii) eine Motoranordnung (4), die einen Hydraulikmotor (40) mit verstellbarem Hubraum, der operativ mit der Verstellpumpe (30) verbunden ist, und Motorübertragungsglieder (41) umfasst, die operativ mit der Ausgangswelle (26) und mit der Sonnenwelle (25) verbunden sind, um die Drehzahländerung der Sonnenwelle (25) mittels des Hydraulikmotors (40) zu befehlen bzw. anzuordnen und Kraft bzw. Leistung auf die Ausgangswelle (26) zu übertragen;
wobei das Leistungsübertragungssystem (1) konfigurierbar ist in:
- eine Anfangskonfiguration, in der die Motoranordnung (4) die Drehung der Ausgangswelle (26) verhindert;
- eine Mehrzahl von Betriebskonfigurationen, in denen die Ausgangswelle (26) Kraft bzw. Leistung auf die Mischanordnung (120) überträgt;
wobei die Pumpenübertragungsglieder (31) eine Pumpenwelle (310), die in Drehung operativ mit der Verstellpumpe (30) verbunden ist, und ein erstes Zahnrad (311) umfassen, das in Drehung starr mit der Pumpenwelle (310) verbunden ist, wobei die Krone (24) eine erste Außenverzahnung (241) umfasst, die mit dem ersten Zahnrad (311) in Eingriff ist;
wobei die Motorübertragungsglieder (41) eine Motorwelle (410), die in Drehung operativ mit dem Hydraulikmotor (40) verbunden ist, und ein drittes Zahnrad (412) umfassen, das in Drehung starr mit der Motorwelle (410) verbunden ist, wobei die Sonnenwelle (25) eine dritte Außenverzahnung (251) umfasst, die mit dem dritten Zahnrad (412) in Eingriff ist;
wobei das Leistungsübertragungssystem **dadurch gekennzeichnet ist, dass** die Motorübertragungsglieder (41) ein zweites Zahnrad (411) umfassen, das in Drehung starr mit der Motorwelle (410) verbunden ist, wobei die Ausgangswelle (26) eine zweite Außenverzahnung (261) umfasst, die mit dem zweiten Zahnrad (411) in Eingriff ist.

2. Leistungsübertragungssystem (1) nach Anspruch 1, wobei in der Anfangskonfiguration die Verstellpumpe (30) auf minimale Pumpenverstellung und der Hydraulikmotor (40) auf maximalen Motorhubraum konfiguriert ist.

3. Leistungsübertragungssystem (1) nach Anspruch 1 oder Anspruch 2, wobei das Leistungsübertragungssystem (1) in eine finale Betriebskonfiguration konfigurierbar ist, in der die Verstellpumpe (30) auf maximale Pumpenverstellung und der Hydraulikmotor (40) auf minimalen Motorhubraum konfiguriert ist.

4. Leistungsübertragungssystem (1) nach einem der vorhergehenden Ansprüche, wobei die Verstellpumpe (30) und der Hydraulikmotor (40) mittels eines geschlossenen Hauptfluidkreislaufs (70) fluidisch verbunden sind.

5. Leistungsübertragungssystem (1) nach einem der vorhergehenden Ansprüche, umfassend zumindest eine Hilfsbetriebsanordnung (50, 60), die in Drehung operativ mit der Eingangswelle (31) verbunden ist, um Hilfsdienste des Mischwagens zu betätigen, beispielsweise eine Mühle oder einen Fräser.

6. Mischwagen umfassend eine Mischanordnung (120), die zumindest eine Schnecke (125) umfasst, und ein Leistungsübertragungssystem (1) nach einem der vorhergehenden Ansprüche, das operativ mit der Mischanordnung (120) verbunden ist.

7. Mischwagen nach Anspruch 6, wobei der Mischwagen vom selbstfahrenden Typ ist und das Leistungsübertragungssystem (1) direkt mit den Wagenmotormitteln (160) verbunden ist.

8. Mischwagen nach Anspruch 7, wobei die Wagenmotormittel (160) eine Motormittelausgangswelle (165) umfassen, wobei der Mischwagen zumindest ein Verbindungsgelenk (180), beispielsweise ein Kardangelenk, umfasst, das direkt zwischen der Motormittelausgangswelle (165) und der Eingangswelle (31) der Untersetzungsgruppe (2) verbinden ist.

## Revendications

1. Système de transmission de puissance (1) pour un wagon mélangeur pour la préparation de mélanges pour animaux, dans lequel le wagon mélangeur comprend une cuve de mélange (110) et un ensemble de mélange (120) comprenant au moins une vis sans fin (125) logée dans ladite cuve de mélange (110), dans lequel le système de transmission de puissance (1) peut être raccordé de manière opérationnelle entre des moyens de moteur de wagon (160) et l'ensemble de mélange (120) et comprend :
i) un groupe réducteur (2) comprenant :
- un arbre d'entrée (21) configuré pour la réception de puissance des moyens de moteur de wagon (160) ;
- un arbre de sortie (26) configuré pour la transmission de puissance à l'ensemble de mélange (120) ;
- un engrenage planétaire (20) comprenant :
a) un support (22) raccordé de manière solidaire en rotation à l'arbre d'entrée (21) ;
b) une couronne (24) raccordée de manière opérationnelle en rotation au support (22) ;
c) un arbre solaire (25) raccordé de manière opérationnelle en rotation au support (22) ;
ii) un ensemble pompe (3) comprenant une pompe à cylindrée variable (30) et des organes de transmission de pompe (31) raccordés de manière opérationnelle à la couronne (24) ;
iii) un ensemble moteur (4) comprenant un moteur hydraulique à cylindrée variable (40) raccordé de manière opérationnelle à la pompe à cylindrée variable (30), et des organes de transmission de moteur (41) raccordés de manière opérationnelle à l'arbre de sortie (26) et à l'arbre solaire (25) pour la commande de la variation de vitesse de l'arbre solaire (25) au moyen du moteur hydraulique (40) et la transmission de puissance à l'arbre de sortie (26) ;
dans lequel le système de transmission de puissance (1) peut être configuré selon :
- une configuration initiale dans laquelle l'ensemble moteur (4) empêche la rotation de l'arbre de sortie (26) ;
- une pluralité de configurations de fonctionnement dans lesquelles l'arbre de sortie (26) transmet de la puissance à l'ensemble de mélange (120) ;
dans lequel les organes de transmission de pompe (31) comprennent un arbre de pompe (310) raccordé de manière opérationnelle en rotation à la pompe à cylindrée variable (30), et un premier engrenage (311) raccordé de manière solidaire en rotation à l'arbre de pompe (310), dans lequel la couronne (24) comprend une première denture externe (241) en prise avec le premier engrenage (311) ;
dans lequel les organes de transmission de moteur (41) comprennent un arbre de moteur (410) raccordé de manière opérationnelle en rotation au moteur hydraulique (40) et un troisième engrenage (412) raccordé de manière solidaire en rotation à l'arbre de moteur (410), dans lequel l'arbre solaire (25) comprend une troisième denture externe (251) engrenée avec le troisième engrenage (412) ;
dans lequel le système de transmission de puissance est **caractérisé en ce que** les organes de transmission de moteur (41) comprennent un deuxième engrenage (411) raccordé de manière solidaire en rotation à l'arbre de moteur (410), dans lequel l'arbre de sortie (26) comprend une deuxième denture externe (261) engrenée avec le deuxième engrenage (411).

2. Système de transmission de puissance (1) selon la revendication 1, dans lequel, dans la configuration initiale, la pompe à cylindrée variable (30) est configurée selon une cylindrée de pompe minimale et le moteur hydraulique (40) est configuré selon une cylindrée de moteur maximale.

3. Système de transmission de puissance (1) selon la revendication 1 ou la revendication 2, dans lequel le système de transmission de puissance (1) peut être configuré selon une configuration de fonctionnement finale dans laquelle la pompe à cylindrée variable (30) est configurée selon une cylindrée de pompe maximale et le moteur hydraulique (40) est configuré selon une cylindrée de moteur minimale.

4. Système de transmission de puissance (1) selon l'une quelconque des revendications précédentes, dans lequel la pompe à cylindrée variable (30) et le moteur hydraulique (40) sont raccordés de façon fluidique au moyen d'un circuit fluidique principal en boucle fermée (70).

5. Système de transmission de puissance (1) selon l'une quelconque des revendications précédentes, comprenant au moins un ensemble de fonctionnement auxiliaire (50, 60) raccordé de manière opérationnelle en rotation à l'arbre d'entrée (31) pour actionner des services auxiliaires du wagon mélangeur, par exemple un broyeur ou une fraise.

6. Wagon mélangeur comprenant un ensemble de mélange (120) qui comprend au moins une vis sans fin (125), et un système de transmission de puissance (1) selon l'une quelconque des revendications précédentes, raccordé de manière opérationnelle à l'ensemble de mélange (120).

7. Wagon mélangeur selon la revendication 6, dans lequel le wagon mélangeur est du type automoteur et le système de transmission de puissance (1) est directement raccordé aux moyens de moteur de wagon (160).

8. Wagon mélangeur selon la revendication 7, dans lequel les moyens de moteur de wagon (160) comprennent un arbre de sortie de moyens de moteur (165), dans lequel le wagon mélangeur comprend au moins un joint de raccordement (180), par exemple un joint de cardan, directement raccordé entre l'arbre de sortie de moyens de moteur (165) et l'arbre d'entrée (31) du groupe réducteur (2).
